# EUROPEAN PATENT SPECIFICATION

(11) **EP 3 627 014 B1**
(45) Date of publication and mention of the grant of the patent: **03.11.2021**
(21) Application number: 19197818.8
(22) Date of filing: 17.09.2019
(51) Int. Cl.: F16J 15/54, F16C 33/76, F16C 33/78, F16C 35/063, F16C 19/06, F16C 23/08

(54) **MECHANICAL SEAL**
GLEITRINGDICHTUNG
JOINT MÉCANIQUE

(30) Priority: 18.09.2018 IT 201800008672
(43) Date of publication of application: 25.03.2020
(73) Proprietor: Fluiten Italia S.p.A., 20154 Milano (IT)
(72) Inventor: COLOMBO, Alberto Delfo, 20154 MILANO (IT); ZUCCON, Luca, 20831 SEREGNO (MONZA BRIANZA) (IT)
(74) Representative: Inchingalo, Simona

(56) References cited:
- EP-A1- 1 382 869
- DE-A1-102016 210 565

## Description

The present invention concerns a mechanical seal.

Mechanical seals are devices that can be applied to rotating shafts to prevent fluid seepages and that are able to withstand high pressures and mechanical stresses.

Mechanical seals can be used in applications in which an actuator arranged in a dry place transmits motion to a rotating member immersed in a fluid by means of a rotating shaft that crosses a wall arranged so as to separate the dry environment from the fluid.

Examples of such applications comprise, for example, mixing tanks, centrifugal pumps, and motor boats in which the shaft transmits rotary motion from the engine.

In the past, a packing, i.e. a braid of hemp threads, was used to generate the seal that was kept around the drive shaft by a stuffing box, which allowed the rotation of the shaft avoiding large seepages.

A solution widely used today for the creation of mechanical seals involves the use of a pair of annular bodies: one stationary and one rotating seal, placed around a drive shaft and in relative motion, one with respect to the other, when the drive shaft is operated.

The two annular bodies are coaxial and coupled frontally so that one face with a circular crown of one annular body is in contact with that of the adjacent annular body.

The rotating annular body is kept in contact with the stationary one by means of a series of springs and by the pressure of the fluid to be held, which axially push it against the stationary body.

During rotation, a minimum amount of fluid, sufficient to lubricate and avoid overheating, seeps through the two annular bodies without, however, escaping into the environment that needs to be insulated.

A conceptually simpler alternative solution does not comprise any system for pressing the two rings against each other and also involves the interposition of lip seals between the rotating sealing body and the stationary body. Numerous designs for lip-shaped gaskets in different materials have been developed that achieve satisfactory sealing results, making this solution an effective and economical alternative to traditional seals in many applications. A problem that these seals, which use lip-shaped gaskets, present is the relatively rapid deterioration of the gaskets in certain situations and a parallel surface deterioration of the sealing body that they abut against. This deterioration of the gasket and of the shaft is accelerated by vibrations, oscillations, and eccentric movements of the rotating shaft housed by the seal during its rotation, which stress the gaskets and increase the friction forces between the gaskets and the surfaces on which they are arranged abutting against each other.

It often happens, in fact, that the shaft itself and the members connected to it in an integral way (propellers, mixing members, actuating members) are not optimally balanced about the rotation axis and generate eccentric forces and related harmonic movements that are discharged directly onto the mechanical seal and, in particular, onto the lip-shaped gaskets.

Even small eccentric forces are able to gradually deform portions of the gasket arranged in an area subject to compression and to cause a partial detachment of the gasket from the sealing member on the opposite side, resulting in a deterioration of the seal. The speed of this deterioration strongly depends on the elasticity of the material used for the gasket. Gaskets made of corrosion-resistant materials such as PTFE, which are employed, for example, in applications such as mechanical seals or mixing tanks for corrosive chemicals, have a particularly rapid deterioration due to their relative rigidity. This rigidity also tends to accentuate the deterioration of the surface on which they are operationally arranged to abut against it. Examples of known mechanical seals can be found in the roll device disclosed in DE102016210565A1 and in the sealed bearing assembly for geared axis disclosed in EP1382869A1.

In this context, the technical task underlying the present invention is to propose a mechanical seal that overcomes at least some of the above-mentioned drawbacks of the prior art.

In particular, it is the purpose of the present invention to provide a mechanical seal with a longer service life than known mechanical seals. Another purpose of the present invention is to propose a mechanical seal able to slow the deterioration of its gaskets.

The specified technical task and purposes are substantially achieved by means of a mechanical seal comprising the technical features set forth in one or more of the accompanying claims.

The dependent claims correspond to possible embodiments of the invention.

Further features and advantages of the present invention will become more apparent from the indicative, and therefore non-limiting, description of a preferred, but not exclusive, embodiment of a mechanical seal.

This description will be set forth hereinafter with reference to the accompanying drawings - provided to illustrate rather than limit the invention's purposes - wherein:
- Figure 1 shows a partially cross-section view of a mechanical seal produced according to the present invention;

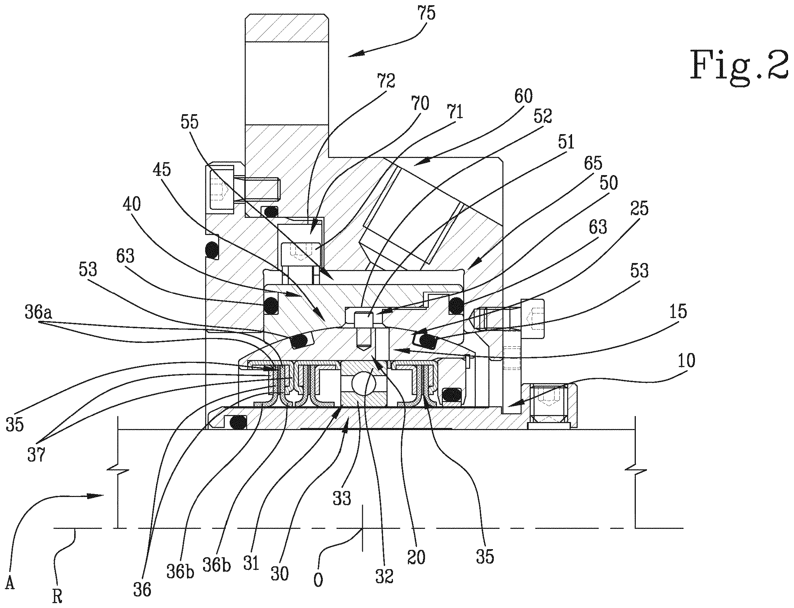

- Figure 2 shows a detail of the seal in Figure 1.

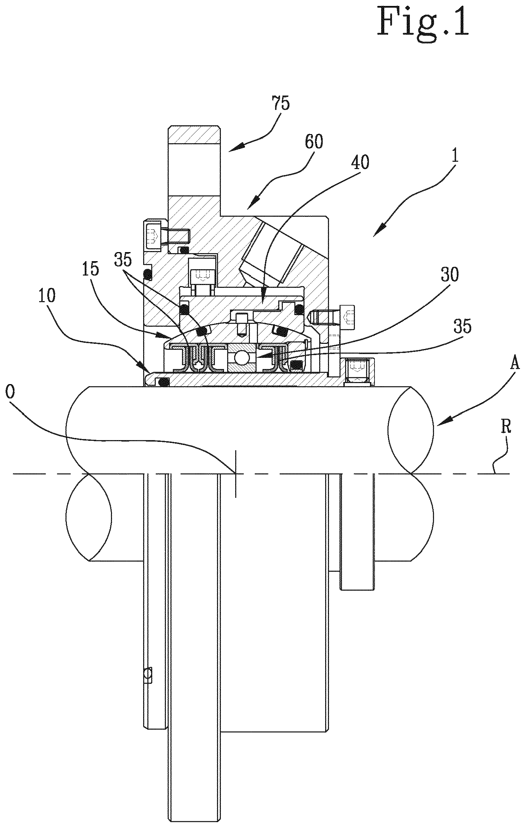

With reference to Figure 1, a mechanical seal, which is the object of the present invention, is indicated as a whole by the number 1 and will be hereinafter referred to with the concise notation "seal 1".

The seal 1 can be installed on a separation wall between air and fluid, for example a tank, at an opening in the same wall suitable for the passage of a rotating shaft "A".

The shaft "A" can be prepared, for example, for the moving of a mixing member suitable for mixing the contents of the tank.

The seal 1 is configured to seal this opening during the rotation of the shaft "A" and is therefore developed radially with respect to a rotation axis "R" of the latter so as to seal a gap that is determined between the shaft "A" and an edge of the opening.

Below is a description of the seal 1 beginning with those components radially more internal with respect to the rotation axis "R" and ending with those radially more external.

The seal 1 comprises an annular body 10 that is connectable in an integral way to the shaft "A" that is configured for an integral connection with the shaft "A".

The annular body 10, also called "sleeve", defines a housing site, which is preferably cylindrical, for the shaft "A" that is developed about its rotation axis "R".

In addition, the annular body 10 has one or more internal grooves facing this housing site and configured to accommodate one or more annular gaskets 11 (O-rings) to seal the interface surface that is determined, in use, between the annular body 10 and the shaft "A".

In a radially external position with respect to the annular body 10, the seal 1 comprises a support portion 20 facing the annular body 10 and developed about it.

The support portion 20 is preferably defined by a bushing body 15 developed circumferentially about the rotation axis "R" that defines a cavity within which the annular body 10 is housed.

In particular, the support portion 20 is arranged at the inner surface of the bushing body 15 facing the annular body 10.

The seal 1 also comprises a rotoidal coupling member 30, preferably a ball rolling bearing 31, interposed between the support portion 20 and the annular body 10 to allow the annular body 10 to rotate with respect to the support portion 20, so as to define the above-mentioned rotation axis "R", common to the annular body 10 and the shaft "A" connected to it.

More specifically, the rotoidal coupling member 30 constrains the annular body 10 in a coaxial position and orientation with respect to the support portion 20.

The rotoidal coupling member 30 is preferably arranged between the support portion 30 and the annular body 10 in such a way as to allow a translational movement of the annular body 10 with respect to the support portion 20 in the direction parallel to the rotation axis "R".

Advantageously, this aspect allows the seal 1 to absorb any unwanted movements and vibrations of the shaft "A" along the rotation axis "R" without causing significant stress to the mechanical components of the same and, in particular, to the rotoidal coupling member 30.

In the preferred embodiment, the rolling bearing 31 has a first outer fifth wheel 32 firmly connected to the support portion 20 and a second inner fifth wheel 33 surrounding the annular body 10 arranged to rest on it. These constrain the mutual tilt of the support portion 20 and of the annular body 10 with respect to the rotation axis "R" and allow a sliding of the annular body 10 with respect to the support portion 20 along the rotation axis "R".

The rotoidal coupling member 30 maintains the mutual position of the annular body 10 and the support portion 20 with respect to the rotation axis "R", defining the above-mentioned gap between the annular body 10 and the support portion 20.

This gap preferably has an annular shape and a radial extension, preferably between 10 mm and 20 mm, and, even more preferably, between 13 mm and 17 mm.

The seal 1 comprises one or more gaskets 35, preferably lip-shaped, interposed between the annular body 10 and the support portion 20 to seal the gap.

There are preferably three gaskets 35 arranged along the rotation axis "R". In addition, the rotoidal coupling member 30 is arranged in such a way as to be interposed between two successive gaskets 35.

In the preferred embodiment, each gasket 35 comprises two annular membranes 36 that have respective bound portions 36a tightened together by special binding members 37 and respective free portions 36b opposite to the bound portions 36a and folded in opposite directions to each other.

In particular, the binding members 37 are configured to keep the bound portions 36a oriented to a plane normal to the rotation axis "R", while the free portions 36b are preferably folded to an orientation substantially parallel to this rotation axis "R".

The gaskets 35 are distributed along the rotation axis "R" and are joined with the rotoidal coupling member 30 that keeps the annular body 10 and the support portion 20 aligned to allow the gaskets 35 to function optimally.

In addition, the rotoidal coupling member 30 transmits the radial loads and bending movements between the annular body 10 and the support portion 20, avoiding deformations of the gaskets 35.

In the preferred embodiment, the gaskets 35 are fixed to the support portion 20 and protrude towards the inner body 10 for positioning itself to abut against it. In particular, the abutment on the inner body 10 determines the fold of the free portions 36b described above.

In an alternative embodiment, the gaskets 35 are fixed to the annular body 10 and extend towards the support portion 20 to arrange them so they abut against it.

The gaskets 35 are preferably made of PTFE; advantageously, this material allows gaskets 35 to withstand particularly harsh temperature conditions and contact with potentially corrosive materials.

The surface of the annular body 10 on which the gaskets 35 are arranged abutting against it is preferably treated in such a way as to present a surface hardening. In its preferred embodiment, the annular body 10 has a chrome oxide ceramic coating that defines this surface.

The gaskets 35 preferably define a hermetic volume between the annular body 10 and the support portion 20 and the seal 1 is configured to allow the introduction of a gas, for example nitrogen, into this hermetic volume to form a protective atmosphere.

The seal 1 also advantageously comprises a first coupling portion 25, in particular one defined by the bushing body 15, at its outer surface facing away from the rotation axis "R", and a second coupling portion 45.

The second coupling portion 45 is preferably defined by a hollow element 40 developed circumferentially about the rotation axis "R" and arranged about the bushing body 15 so as to accommodate this bushing body 15 in its own cavity.

In particular, the hollow element 40 has the second coupling portion 45 at its inner surface facing the rotation axis "R".

The first and second coupling portion 25 and 45 have a mutual spherical shape coupling that defines an oscillation center "O", preferably arranged along the rotation axis "R", and allows a mutual oscillation between the first and second coupling portion 25 and 45 about this oscillation center "O".

This spherical coupling therefore allows the annular body 10 to tilt with respect to the second coupling portion 45 to support, in use, different tilts of the rotation axis "R".

In other words, this spherical coupling allows the annular body 10, and the support portion 20, to oscillate about the oscillation center "O" when subjected to movements deriving from vibrations of the shaft "A" and avoids harmonic stresses to the gaskets 35 and to the rotoidal coupling member 30 as a result of such vibrations.

In the preferred embodiment, the first coupling portion 25 has a convex surface, preferably spherical and developed about the oscillation center "O", facing away from the rotation axis "R".

Similarly, the second coupling portion 45 has a concave surface, preferably spherical and developed around the oscillation center "O", counter-shaped and facing the convex surface of the first coupling portion 25 and facing the rotation axis "R".

In the embodiment shown, the hollow element 40 is composed of two or more mutually connectable bodies so that they can be assembled about the bushing body 15, which, at the end of the assembly of the hollow element 40, is trapped inside the concavity defined by the second coupling portion 45.

The seal 1 preferably has restraining portions 50 interposed between the first and second coupling portions 25 and 45 to prevent mutual rotations between the first and second coupling portions 25 and 45 about the rotation axis "R".

The restraining portions 50 are also preferably configured to define a maximum width of the oscillation described above, preferably below 10°, to prevent excessive tilts of the rotation axis "R".

In the preferred embodiment, the restraining portions 50 are defined by one or more pins 51, protruding from the first coupling portion 25, and by respective guides 52, obtained in the second coupling portion 45 and coplanar to the rotation axis "R", in which the pins 51 are slidingly engaged.

The seal 1 preferably has a pair of annular gaskets 53 (O-rings) arranged in their respective sites between the first and second coupling portions 25 and 45 to prevent seepages between them.

In addition, the seal 1 is configured to inject a gas between the above-mentioned pair of annular gaskets 53 to allow the creation of a controlled atmosphere between the first and second coupling portions 25 and 45. The seal 1 preferably comprises a third coupling portion 55, in particular defined by hollow element 40 at its outer surface facing away from the rotation axis "R", and a fourth coupling portion 65.

The fourth coupling portion 65 is preferably defined by a fixed element 60 arranged about the hollow element 40 and having an inner cavity in which the hollow element 40 is housed.

The third and fourth coupling portion 55 and 65 have a coupling of a mutual shape defining a sliding plane substantially normal to the rotation axis "R", to allow a purely translational movement of the third coupling portion 55 with respect to the fourth coupling portion 65 on that sliding plane.

This coupling allows an oscillation along the above-mentioned sliding plane of the support portion 20, and, therefore, of the annular body 10 and of the shaft "A" bound to it, with respect to the fixed element 60.

In the preferred embodiment, the third and fourth coupling portions 55 and 65 have their respective abutment surfaces opposite and parallel to the sliding plane and arranged to abut against each other.

In addition, the third and fourth coupling portions 55 and 65 have a coupling with mutual play in the direction normal to the rotation axis "R" to allow mutual movement on the sliding plane. The maximum extent of this play is preferably between 5 mm and 15 mm, even more preferably between 8 mm and 12 mm.

In the preferred embodiment, the fourth coupling portion 65 defines a groove and the third coupling portion 55 defines a crown inserted with radial play in that groove.

The seal 1 preferably comprises a pair of annular gaskets 63 (O-rings) interposed between the third and fourth coupling portions 55 and 65 to prevent seepages.

In the embodiment shown, the third and fourth coupling portions 55 and 65 define between them a volume sealed by the above pair of annular gaskets and the seal 1 is configured to allow the release of gas into this volume to allow the creation of a controlled atmosphere within it.

In the preferred embodiment, the seal 1 comprises the restraining means 70, preferably one or more pins 71 engaged in respective guides 72, acting between the third and fourth coupling portion 55 and 65 to prevent mutual rotations of the latter.

In addition, in at least one embodiment, the seal 1 comprises elastic return means, not shown, acting between the third and fourth coupling portions 55 and 65 to move them mutually towards a mutual position predetermined as a result of a disturbance, caused, for example, by a vibration of the shaft "A".

The fixed element 60 preferably comprises one or more bodies that can be mutually assembled about the hollow element 40 so as to define a site for the latter in its internal cavity in which, following the assembly of the fixed element 60, the hollow element 40 is imprisoned.

The seal 1 comprises a stationary connection portion 75, preferably defined by the same fixed element 60 and arranged in a radially external position with respect to the components described above.

The connection portion 75 is suitable for connecting the seal 1 to the wall of a tank, e.g. a mixer, preferably by means of a flanged coupling.

In the described embodiment, the first and second coupling portions 25 and 45 are arranged in a radially internal position with respect to the third and fourth coupling portions 55 and 65.

The object of the present invention is a further functional, but less effective, embodiment wherein the first and second coupling portions 25 and 45 are arranged in a radially external position with respect to the third and fourth coupling portions 55 and 65, so as to reverse the order with respect to the rotation axis "R" of the spherical coupling and of the sliding coupling.

The present invention achieves the purpose proposed, overcoming the drawbacks of the prior art.

Advantageously, the mechanical seal described above allows the shaft to rotate freely about the rotation axis and, in the event of vibrations of the shaft or unforeseen movements outside this rotation, the rotoidal coupling member is able to transmit the resulting loads directly to the support portion without these loads affecting the gaskets.

The spherical coupling between the first and second coupling portions allows the support portion to swing freely about the oscillation center defined above, supporting the vibrations of the shaft and avoiding the consequent generation of strains inside the rotoidal coupling member and possible deformation of the gaskets.

In addition, the sliding coupling between the third and fourth coupling portions allows the support portion to oscillate freely in a radial direction with respect to the rotation axis, supporting further vibrations of the shaft in that direction and avoiding the relative generation of strains inside the rotoidal coupling member and possible deformation of the gaskets.

Finally, the sliding coupling between the second fifth wheel of the bearing and the annular body allows the latter to oscillate along the rotation axis and allows for the support of movements and oscillations of the shaft in this direction and the avoidance of the relative strains on the bearing that would result.

## Claims

1. A mechanical seal (1), comprising:
- a stationary connection portion (75);
- an annular body (10) connectable to a rotatable shaft (A);
- a support portion (20) facing the annular body (10);
- a rotoidal coupling member (30) acting between said support portion (20) and said annular body (10) to allow a rotation of said annular body (10) with respect to said support portion (20) about a rotation axis (R);
- one or more gaskets (35), preferably lip-shaped gaskets, interposed between said annular body (10) and said support portion (20) to seal a gap between said annular body (10) and said support portion (20);
- a first and a second coupling portion (25, 45) having a mutual spherical shape coupling between said support portion (20) and said connection portion (75), to define an oscillation center (O) of said annular body (10) with respect to said connection portion (75) and to allow a tilt of said rotation axis (R) about said oscillation center (O);
**characterized in that** it also comprises a third and a fourth coupling portion (55, 65) having a mutual shape coupling defining a sliding plane, substantially normal to said rotation axis (R), of said third coupling portion (55) with respect to said fourth coupling portion (65) to allow a translation of said support portion (20) with respect to said connection portion (75) along said sliding plane.

2. The seal (1) according to claim 1, wherein said first coupling portion (25) has a convex surface, preferably spherical, and said second coupling portion (45) has a concave surface counter-shaped with respect to the convex surface and facing the convex surface of the first coupling portion (25).

3. The seal (1) according to claim 1 or 2, having restraining portions (50), preferably one or more pins (51) engaged in respective guides, acting between said first and second coupling portions (25, 45) to prevent mutual rotations of said first and second coupling portions (25, 45) about the rotation axis (R) and preferably to define a maximum width of said tilt.

4. The seal (1) according to one or more of the preceding claims, wherein said rotoidal coupling member (30) is connected to the support portion (20) and to the annular body (10) so as to allow a translational movement of said annular body (10) with respect to said support portion (20) parallel to said rotation axis (R).

5. The seal (1) according to claim 4, wherein said rotoidal coupling member (30) comprises a rolling bearing (31), preferably a ball bearing, having a first fifth wheel (32) fixed to one of said annular body (10) and support portion (20) and a second fifth wheel (33) arranged slidingly resting on the other of said annular body (10) and support portion (20) to allow said translational movement.

6. The seal (1) according to one or more of the preceding claims, comprising a bushing body (15) defining a cavity in which said annular body (10) is accommodated, said bushing body (15) having said support portion (20) at an inner surface thereof facing said rotation axis (R), and said first coupling portion (25) at an outer surface thereof facing away from said rotation axis (R).

7. The seal (1) according to any of the preceding claims, having restraining means (70), preferably one or more pins (71) engaged in respective guides (72), acting between said third and fourth coupling portions (55, 65) to prevent mutual rotations of said third and fourth coupling portions (55, 65).

8. The seal (1) according to any of the preceding claims, comprising elastic return means acting between the third and fourth coupling portions (55, 65) to mutually move said third and fourth coupling portions (55, 65) towards a predetermined mutual position upon a disturbance of said predetermined mutual position.

9. The seal (1) according to any of the preceding claims, comprising a hollow element (40) arranged about said annular body (10) and having said second coupling portion (45) at an inner surface thereof facing said rotation axis (R), and said third coupling portion (55) at an outer surface thereof facing away from said rotation axis (R).

10. The seal (1) according to any of the preceding claims, comprising a fixed element (60) defining an inner cavity and having said connection portion (75), said fixed element (60) having said fourth coupling portion (65) at a surface thereof facing said rotation axis (R).

## Patentansprüche

1. Gleitringdichtung (1), umfassend:
- einen ortsfesten Verbindungsabschnitt (75);
- einen ringförmigen Körper (10), der mit einer drehbaren Welle (A) verbunden werden kann;
- einen Lagerabschnitt (20) vor dem ringförmigen Körper (10);
- ein drehbares Kuppelglied (30), das zwischen dem genannten Lagerabschnitt (20) und dem genannten ringförmigen Körper (10) wirkt, um die Drehung des genannten ringförmigen Körpers (10) im Verhältnis zu dem genannten Lagerabschnitt (20) um eine Drehachse (R) zu gestatten;
- eine oder mehr Dichtungen (35), vorzugsweise Lippendichtungen, die zwischen dem genannten ringförmigen Körper (10) und dem genannten Lagerabschnitt (20) eingesetzt sind, um einen Spalt zwischen dem genannten ringförmigen Körper (10) und dem genannten Lagerabschnitt (20) abzudichten;
- einen ersten und einen zweiten Kupplungsabschnitt (25, 45) mit einer gegenseitigen kugelförmigen Kupplung zwischen dem genannten Lagerabschnitt (20) und dem genannten Verbindungsabschnitt (75), um ein Oszillationszentrum (O) des genannten ringförmigen Körpers (10) im Verhältnis zu dem genannten Verbindungsabschnitt (75) zu definieren und eine Neigung der genannten Drehachse (R) um das genannte Oszillationszentrum (O) zu gestatten;
**dadurch gekennzeichnet, dass** sie außerdem einen dritten und vierten Kupplungsabschnitt (55, 65) umfasst, die eine gegenseitige Formkupplung aufweisen, die eine Gleitebene im Wesentlichen senkrecht zu der genannten Drehachse (R) des genannten dritten Kupplungsabschnitts (55) im Verhältnis zu dem genannten vierten Kupplungsabschnitt (65) definieren, um eine Versetzung des genannten Lagerabschnitts (20) im Verhältnis zu dem genannten Verbindungsabschnitt (75) entlang der genannten Gleitebene zu gestatten.

2. Gleitringdichtung (1) nach Anspruch 1, bei der der genannte erste Kupplungsabschnitt (25) eine konvexe Oberfläche, vorzugsweise kugelförmig, aufweist und der genannte zweite Kupplungsabschnitt (45) eine konkave Oberfläche als Gegenprofil im Verhältnis zu der konvexen Oberfläche aufweist und zu der konvexen Oberfläche des ersten Kupplungsabschnitts (25) gerichtet liegt.

3. Gleitringdichtung (1) nach Anspruch 1 oder 2 mit Rückhalteabschnitten (50), vorzugsweise ein oder mehrere Stifte (51), die sich in entsprechenden Führungen in Eingriff befinden und zwischen dem genannten ersten und zweiten Kupplungsabschnitt (25, 45) wirken, um die gegenseitigen Drehungen des genannten ersten und zweiten Kupplungsabschnitts (25, 45) um die Drehachse (R) zu vermeiden und vorzugsweise eine maximale Breite der genannten Neigung zu definieren.

4. Gleitringdichtung (1) nach einem oder mehreren der vorangegangenen Ansprüche, bei der das genannte drehbare Kuppelglied (30) mit dem Lagerabschnitt (20) und dem ringförmigen Körper (10) verbunden ist, um eine Verschiebungsbewegung des genannten ringförmigen Körpers (10) im Verhältnis zu dem genannten Lagerabschnitt (20) parallel zu der genannten Drehachse (R) zu gestatten.

5. Gleitringdichtung (1) nach Anspruch 4, bei der das genannte drehbare Kuppelglied (30) ein Wälzlager (31) umfasst, vorzugsweise ein Kugellager, umfasst, das ein erstes fünftes Rad (32) aufweist, das entweder an dem genannten ringförmigen Körper (10) oder dem Lagerabschnitt (20) befestigt ist, und ein zweites fünftes Rad (33), das gleitend angeordnet ist und auf dem jeweils anderen genannten entweder ringförmigen Körper (10) oder Trägerabschnitt (20) ruht, um die genannte Verschiebungsbewegung zu gestatten.

6. Gleitringdichtung (1) nach einem oder mehreren der vorangegangenen Ansprüche, umfassend einen eine Kavität definierenden Buchsenkörper (15), in der der genannte ringförmige Körper (10) untergebracht ist, wobei der genannte Buchsenkörper (15) den genannten Lagerabschnitt (20) an einer Innenfläche desselben zu der genannten Drehachse (R) und den genannten ersten Kupplungsabschnitt (25) an einer Außenfläche desselben von der genannten Drehachse (R) weggerichtet aufweist.

7. Gleitringdichtung (1) nach einem beliebigen der vorangegangenen Ansprüche mit Rückhaltemitteln (70), vorzugsweise ein oder mehrere Stifte (71), die sich in entsprechenden Führungen (72) in Eingriff befinden und zwischen den genannten dritten und vierten Kupplungsabschnitten (55, 65) wirken, um die gegenseitigen Drehungen des genannten dritten und vierten Kupplungsabschnitts (55, 65) zu verhindern.

8. Gleitringdichtung (1) nach einem beliebigen der vorangegangenen Ansprüche, umfassend elastische Rückholmittel, die zwischen dem dritten und dem vierten Kupplungsabschnitt (55, 65) wirken, um gegenseitig den genannten dritten und vierten Kupplungsabschnitt (55, 65) in Richtung einer zuvor festgelegten gegenseitigen Position zu bewegen, wenn die genannte festgelegte gegenseitige Position gestört wird.

9. Gleitringdichtung (1) nach einem beliebigen der vorangegangenen Ansprüche, umfassend ein um den genannten ringförmigen Körper (10) angeordnetes Hohlelement (40), das den genannten zweiten Kupplungsabschnitt (45) an einer Innenfläche desselben zu der genannten Drehachse (R) und den genannten dritten Kupplungsabschnitt (55) an einer Außenfläche desselben von der genannten Drehachse (R) weggerichtet aufweist.

10. Gleitringdichtung (1) nach einem beliebigen der vorangegangenen Ansprüche, umfassend ein festes Element (60), das eine innere Kavität definiert und den genannten Verbindungsabschnitt (75) aufweist, wobei das genannte feste Element (60) den genannten vierten Kupplungsabschnitt (65) an einer Oberfläche desselben zu der genannten Drehachse (R) gerichtet aufweist.

## Revendications

1. Joint mécanique (1), comprenant :
- une partie de raccordement (75) fixe ;
- un corps annulaire (10) raccordable à un arbre rotatif (A) ;
- une partie de support (20) orientée vers le corps annulaire (10) ;
- un élément d'accouplement rotoïde (30) agissant entre ladite partie de support (20) et ledit corps annulaire (10) afin de permettre une rotation dudit corps annulaire (10) par rapport à ladite partie de support (20) autour d'un axe de rotation (R) ;
- une ou plusieurs rondelles d'étanchéité (35), préférablement rondelles d'étanchéité à lèvres, interposées entre ledit corps annulaire (10) et ladite partie de support (20) pour sceller un espace entre ledit corps annulaire (10) et ladite partie de support (20) ;
- une première et une deuxième partie d'accouplement (25, 45) ayant un accouplement réciproque de forme sphérique entre ladite partie de support (20) et ladite partie de raccordement (75), pour définir un centre d'oscillation (O) dudit corps annulaire (10) par rapport à ladite partie de raccordement (75) et pour permettre une inclinaison dudit axe de rotation (R) autour dudit centre d'oscillation (O) ;
**caractérisé en ce qu'**il comprend en outre une troisième et une quatrième partie d'accouplement (55, 65) ayant un accouplement réciproque de forme définissant un plan coulissant, sensiblement normal audit axe de rotation (R), de ladite troisième partie d'accouplement (55) par rapport à ladite quatrième partie d'accouplement (65) afin de permettre une translation de ladite partie de support (20) par rapport à ladite partie de raccordement (75) le long dudit plan coulissant.

2. Joint (1) selon la revendication 1, dans lequel ladite première partie d'accouplement (25) a une surface convexe, préférablement sphérique, et ladite deuxième partie d'accouplement (45) a une surface concave épousant la surface convexe et orientée vers la surface convexe de la première partie d'accouplement (25).

3. Joint (1) selon la revendication 1 ou 2, ayant des parties de retenue (50), préférablement un ou plusieurs pions (51) engagés dans les guides respectifs, agissant entre lesdites première et deuxième parties d'accouplement (25, 45) afin d'empêcher les rotations réciproques de ladite première et deuxième partie d'accouplement (25, 45) autour de l'axe de rotation (R) et préférablement afin de définir une largeur maximale de ladite inclinaison.

4. Joint (1) selon l'une quelconque des revendications précédentes, dans lequel ledit élément d'accouplement rotoïde (30) est raccordé à la partie de support (20) et au corps annulaire (10) de manière à permettre un mouvement de translation dudit corps annulaire (10) par rapport à ladite partie de support (20) parallèle audit axe de rotation (R).

5. Joint (1) selon la revendication 4, dans lequel ledit élément d'accouplement rotoïde (30) comprend un palier à roulement (31), préférablement un palier à billes, ayant une première sellette d'attelage (32) fixée soit audit corps annulaire (10) soit à la partie de support (20) et une deuxième sellette d'attelage (33) disposée de manière coulissante reposant sur l'autre entre ledit corps annulaire (10) et la partie de support (20) pour permettre ledit mouvement de translation.

6. Joint (1) selon l'une quelconque des revendications précédentes, comprenant un corps de coussinet (15) définissant une cavité dans laquelle ledit corps annulaire (10) est logé, ledit corps de coussinet (15) ayant ladite partie de support (20) sur une surface interne de celui-ci orientée vers ledit axe de rotation (R), et ladite première partie d'accouplement (25) sur une surface externe de celui-ci s'éloignant dudit axe de rotation (R).

7. Joint (1) selon l'une quelconque des revendications précédentes, ayant des moyens de retenue (70), préférablement un ou plusieurs pions (71) engagés dans les guides respectifs (72), agissant entre lesdites troisième et quatrième parties d'accouplement (55, 65) pour empêcher les rotations réciproques desdites troisième et quatrième parties d'accouplement (55, 65).

8. Joint (1) selon l'une quelconque des revendications précédentes, comprenant des moyens de rappel élastique agissant entre la troisième et la quatrième parties d'accouplement (55, 65) afin de déplacer réciproquement lesdites troisième et quatrième parties d'accouplement (55, 65) vers une position réciproque prédéterminée lors d'une perturbation de ladite position réciproque prédéterminée.

9. Joint (1) selon l'une quelconque des revendications précédentes, comprenant un élément creux (40) disposé autour dudit corps annulaire (10) et ayant ladite deuxième partie d'accouplement (45) sur une surface interne de celui-ci orientée vers ledit axe de rotation (R), et ladite troisième partie d'accouplement (55) sur une surface externe de celui-ci s'éloignant dudit axe de rotation (R).

10. Joint (1) selon l'une quelconque des revendications précédentes, comprenant un élément fixe (60) définissant une cavité interne et ayant ladite partie de raccordement (75), ledit élément fixe (60) ayant ladite quatrième partie d'accouplement (65) sur une surface de celui-ci orientée vers ledit axe de rotation (R).
